# EUROPEAN PATENT APPLICATION

(11) **EP 4 446 956 A1**
(43) Date of publication of application: **16.10.2024**
(21) Application number: 23167789.9
(22) Date of filing: 13.04.2023
(51) Int. Cl.: G06Q 10/06, F24F 11/46, G06Q 10/063, G06Q 10/0631, G06Q 50/06, G16Y 10/35, G16Y 20/10, G16Y 20/30, F24F 130/10, F24F 140/60

(54) **A DEVICE AND METHOD FOR DETERMINING A SETPOINT TEMPERATURE OF A HEATING, VENTILATION, AND AIR-CONDITIONING UNIT**

(71) Applicant: Robert Bosch GmbH, 70442 Stuttgart (DE)
(72) Inventor: Bhuiyan, Shihabul, 573943 Singapur (SG); Tanyildiz, Baris, 574036 Singapore (SG)

(57) **Abstract**

The present disclosure relates to a device for determining a setpoint temperature of a heating, ventilation, and air-conditioning (HVAC) unit operating in a first mode, the device comprising a processor configured to obtain: a first parameter indicative of a forecasted power consumption of the HVAC unit, the forecasted power consumption of the HVAC unit based on a reference table, the reference table comprising an estimated power consumption of the HVAC unit at a plurality of timepoints; and a second parameter indicative of a renewable power generated by a renewable power source configured to supply renewable power to the HVAC unit; wherein the processor is further configured to: compare the first parameter and the second parameter, and determine the setpoint temperature based on the comparison of the first parameter and the second parameter. Further disclosed is a method for determining a setpoint temperature of the HVAC unit.

## Description

### TECHNICAL FIELD

The present disclosure relates to a device and method for determining a setpoint temperature of a heating, ventilation, and air-conditioning (HVAC) unit.

### BACKGROUND

The energy consumption of HVAC units accounts for a significant proportion of the total energy consumption of a building. Therefore, energy management systems that could reduce and/or optimize the energy consumption of such HVAC units will be useful. In addition, such energy management systems should provide the user flexibility to select between maximizing personal thermal comfort and/or optimizing the energy efficiency of the HVAC unit.

Conventional energy management systems for HVAC units are based on monitoring systems that require user intervention for the actual management and control of the HVAC operating conditions, e.g. for determining an optimal setpoint temperature of the HVAC unit. To date, automated energy management systems that provide an automated control system for optimizing the energy consumption of the HVAC unit are not available.

Accordingly, there exists a need for an improved device and method that seeks to address at least one of the aforementioned issue(s).

### SUMMARY

The disclosure was conceptualized to provide an improved device and method, for determining an optimal setpoint temperature for an energy efficient HVAC unit, in which the HVAC unit is configured to operate based on renewable power generated by a renewable power source. To this end, the improved device and method, provides an intelligent and predictive energy management system that allows the real-time and continuous adaptive control of the operating conditions, to maximize the energy efficiency of the HVAC unit. Specifically, the control algorithm of the improved device and method, provides for the determination of the setpoint temperature, based on an actual or forecasted renewable power generated by the renewable power source. Furthermore, the improved device and method, allows the user to maximize personal thermal comfort and/or optimize the energy efficiency of the HVAC unit, to ensure both energy efficiency and personal thermal comfort.

According to the present disclosure, a device for determining a setpoint temperature of a HVAC unit operating in a first mode, in which the HVAC unit is configured to operate using the renewable power generated by the renewable power source is provided in claim 1. A method according to the disclosure is defined in claim 14, and a computer program comprising instructions to execute the method is defined in claim 15.

The dependent claims define some examples associated with the device.

### BRIEF DESCRIPTION OF THE DRAWINGS

The disclosure will be better understood with reference to the detailed description when considered in conjunction with the non-limiting examples and the accompanying drawings, in which:
- FIG. 1 shows an exemplary schematic illustration of a device 100 for determining a setpoint temperature 130 of a HVAC unit operating in a first mode;
- FIG. 2A shows a schematic illustration of the device 200A for determining the setpoint temperature 130 of the HVAC unit operating in the first mode, in accordance with some embodiments of the disclosure;
- FIG. 2B shows a schematic illustration of the device 200B for determining the setpoint temperature 130 of the HVAC unit operating in the first mode, in accordance with some other embodiments of the disclosure;
- FIG. 3 shows another exemplary schematic illustration of the device 300 for determining the setpoint temperature 130 of the HVAC unit operating in the first mode;
- FIG. 4 shows an exemplary flowchart of a method 400 for determining a setpoint temperature of a HVAC unit operating in the first mode; and
- FIG. 5 shows an exemplary schematic illustration of the operating conditions and control scenarios of the device 100, 200A, 200B, 300, in accordance with various embodiments of the disclosure.

### DETAILED DESCRIPTION

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements. As used herein, the term "and/or" includes any and all combinations of one or more of the associated listed items.

Throughout the description, the term "setpoint temperature", may refer to an optimal operating temperature of the HVAC unit, in which the HVAC unit operates solely on the available, e.g. actual or forecasted, renewable power generated by the renewable power source. In other words, the power consumption of the HVAC unit at the setpoint temperature may be equal to or less than the available, e.g. actual or forecasted, renewable power generated by the renewable power source.

Throughout the description, the term "processor(s)", may refer to a circuit, including analog circuit or components, digital circuits or components, hybrid circuits or components. Any other kind of implementation of the respective functions which will be described in more detail below may also be understood as a "circuit" in accordance with an alternative embodiment. A digital circuit may be understood as any kind of logic implementing entity, which may be a special purpose circuitry or a processor executing software stored in a memory, or a firmware.

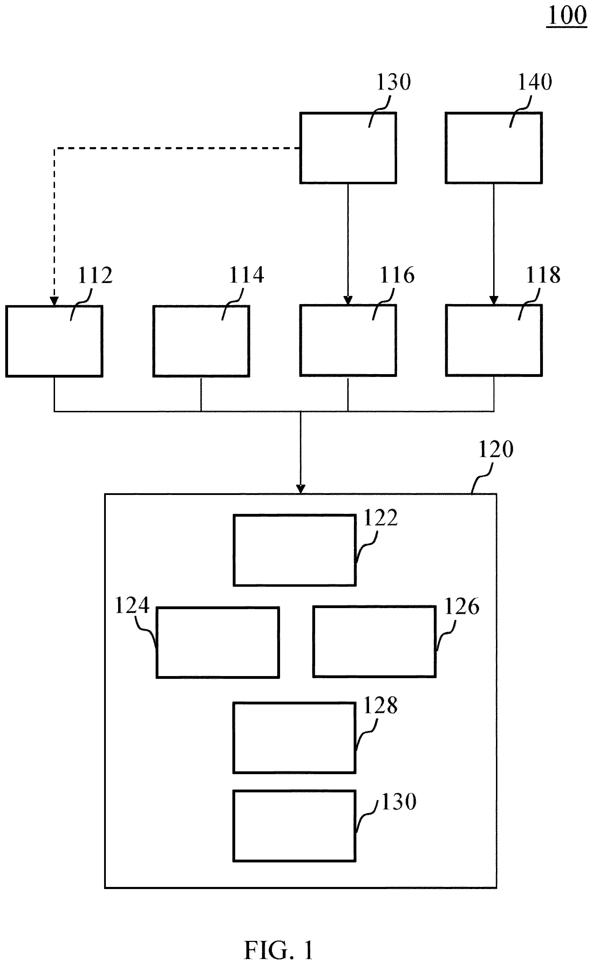

FIG. 1 shows an exemplary schematic illustration of a device 100 for determining a setpoint temperature 130 of a HVAC unit operating in a first mode. In various embodiments, the device 100 may refer to an energy management system or controller for a HVAC unit, which may provide monitoring and adjusting of the power consumption of the HVAC unit.

In some embodiments, the HVAC unit may be an air-conditioning unit. In some other embodiments, the HVAC unit may be a heating unit, or a ventilation unit. The HVAC unit may also include one or more heat exchangers, such as an evaporator and a condenser.

In various embodiments, the HVAC unit may be powered by a power source comprising a renewable power source for generating renewable power, and a non-renewable power source for generating non-renewable power. The non-renewable power source may refer to power or electricity supplied from a power grid, which may be generated from one or more non-renewable power sources, e.g. coal, oil, fossil fuels. In various embodiments, the renewable power source may be a photovoltaic device, such as a solar module comprising a plurality of solar cells for generating renewable power or electricity, e.g. solar power from light.

In various embodiments, the HVAC unit may operate in two or more modes - a first mode, wherein the HVAC is configured to operate using renewable power generated by the renewable power source, e.g. solar power; and a second mode, wherein the HVAC is configured to operate using renewable power, and/or non-renewable power generated by the non-renewable power source. In some embodiments, the HVAC unit operating in the first mode may be configured to be operable solely based on the renewable power generated by the renewable power source.

Referring to FIG. 1, the device 100 includes a processor 120 configured to obtain, a first parameter 112 indicative of a forecasted power consumption of the HVAC unit. The first parameter 112 of the forecasted power consumption is based on a reference table comprising a plurality of values of an estimated power consumption of the HVAC unit at a plurality of timepoints throughout the day, and may also be referred to as the power demand profile of the HVAC unit. A user or the processor of the device, may therefore forecast the power consumption of the HVAC unit at a specific time of the day. For example, based on the reference table, it may be determined that peak power consumption of the HVAC unit occurs in the afternoon.

In various embodiments, the estimated power consumption of the HVAC unit at the plurality of timepoints throughout the day, may be based on historical data comprising, a reference indoor temperature within an enclosed area, e.g. an indoor temperature; a reference outdoor temperature reading external to the enclosed area, e.g. an outdoor temperature; a reference running frequency of a compressor of the HVAC unit; and/or a reference power consumption demand, at the plurality of timepoints throughout the day. The enclosed area may refer to an area, e.g. enclosed space such as a vehicle, building or room, at which the HVAC unit is situated at. For example, the historical data comprising the aforementioned parameters may be obtained at the plurality of timepoints throughout the day, and the reference table may be generated using one or more machine learning algorithms based on the historical data. In various embodiments, the reference table comprising at least the first parameter 112 may be provided to the processor 120 via a user interface 130, or may be stored in a controller of the HVAC unit.

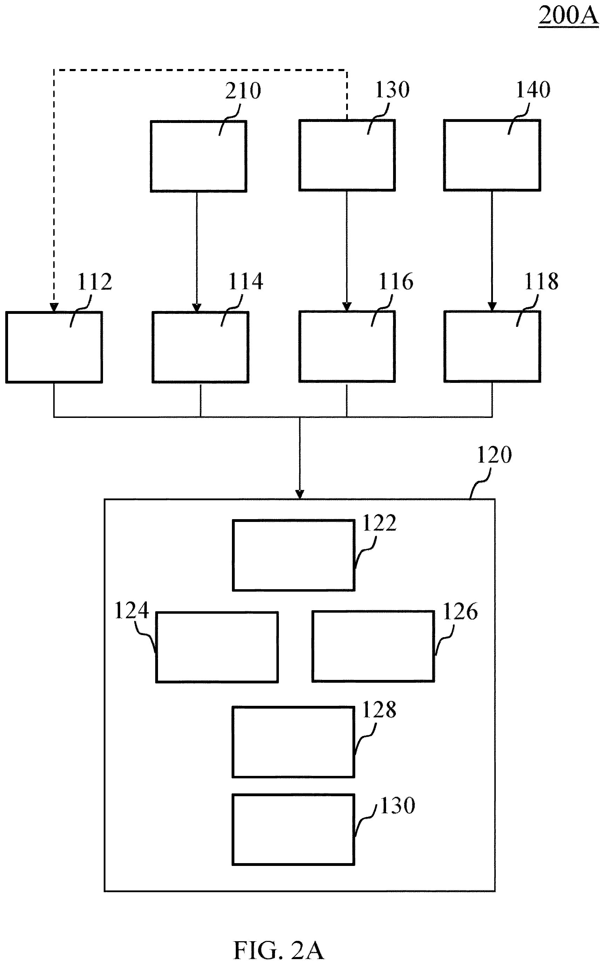

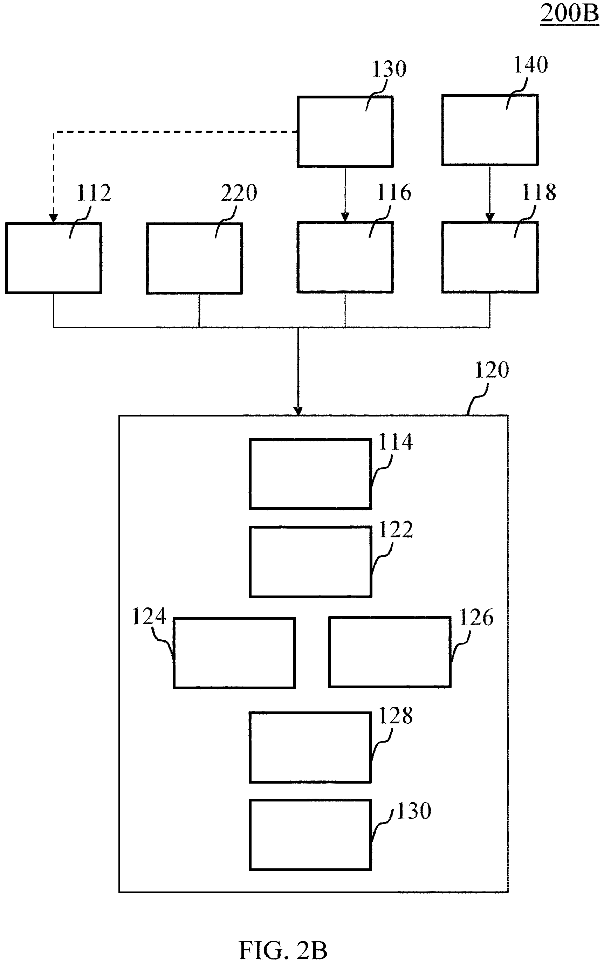

The processor 120 is further configured to obtain, a second parameter 114 indicative of a renewable power generated by the renewable power source configured to supply renewable power to the HVAC unit. The second parameter 114 may refer to the available renewable power supplied to the HVAC unit, for example, an actual renewable power generated by the renewable power source, or a forecasted or predicted renewable power that may be generated by the renewable power source. Means for obtaining the second parameter 114 will be discussed with reference to FIGS. 2A and 2B.

Referring to FIG. 1, the device 100 may further include a user interface 130 for obtaining a first desired setpoint temperature 116 of the HVAC unit. The first desired setpoint temperature 116 may be a user desired temperature for maximizing the user's thermal comfort, and may result in a higher, e.g. a maximum power consumption of the HVAC unit. Based on the first desired setpoint temperature 116, the processor 120 may be further configured to calculate a third parameter 122 indicative of a maximum power consumption of the HVAC unit.

Based on the first parameter 112 indicative of the forecasted power consumption of the HVAC unit, the second parameter 114 indicative of the renewable power available to the HVAC unit, and the third parameter 122 indicative of the maximum power consumption of the HVAC unit, the processor 120 is further configured to: compare 124 the values of the first parameter 112 and the second parameter 114, and/or compare 126 the values of the third parameter 122 and the second parameter 114. Based on said comparisons between the first parameter 112 and the second parameter 114, and/or the third parameter 122 and the second parameter 114, the processor 120 determines the setpoint temperature 130 of the HVAC unit operating in the first mode.

In various embodiments, the processor 120 is configured to determine the setpoint temperature 130, when at least one of the forecasted power consumption, e.g. first parameter 112; and/or the maximum power consumption of the HVAC unit at the first desired setpoint temperature 116, e.g. third parameter 122, is greater than or equal to the available renewable power, e.g. second parameter 114. In other words, the device 100, which is operating in the first mode, is configured to determine the setpoint temperature 130 to enable the HVAC unit to operate at a power consumption level which matches, e.g. is equal to, or in some embodiments, is less than, the renewable power available to the HVAC unit, e.g. second parameter 114. Accordingly, an improved device for maximizing the energy efficiency of the HVAC unit is provided.

To determine the setpoint temperature 130 for maximizing the energy efficiency of the HVAC unit, the device 100 may further include a first sensor 140 for obtaining an outdoor temperature reading 118 indicative of the outdoor temperature external to the enclosed area, e.g. the area at which the HVAC unit is situated at, and the processor 120 may be further configured to, compare 128 the outdoor temperature reading 118 with that of the reference outdoor temperature reading of the reference table of the HVAC unit, and to determine the setpoint temperature 130 based on said comparison 128. That is, the processor 120 is configured to select and determine a setpoint temperature 130, based on the reference table, under the same outdoor temperature conditions, i.e. by matching the outdoor temperature reading 118 with that of the reference outdoor temperature readings stored in the reference table, such that the power consumption of the HVAC unit which is operating at the determined setpoint temperature 130, is equal to or less than the available renewable power generated by the renewable power source, e.g. second parameter 114. In some embodiments, the processor 120 may be further configured to adjust the running frequency of the compressor based on the determined setpoint temperature 130, to optimize the energy efficacy of the HVAC unit.

FIG. 2A shows a schematic illustration of the device 200A for determining the setpoint temperature 130 of the HVAC unit operating in the first mode, in accordance with some embodiments of the disclosure. Device 200A may be based on device 100 discussed with reference to FIG. 1 and repeated descriptions will be omitted for conciseness. In some embodiments, the second parameter 112 may represent the actual renewable power that is available, e.g. supplied to the HVAC unit.

As shown in FIG. 2A, the device 100 may further include a second sensor 210, configured to obtain an actual renewable power generated by the renewable power source, which is supplied to the HVAC unit. The second sensor 210 may be a power meter suitable for measuring the actual renewable power generated by the renewable power source, and for providing the actual renewable power, e.g. second parameter 114 to the processor 120.

FIG. 2B shows a schematic illustration of the device 200B for determining the setpoint temperature 130 of the HVAC unit operating in the first mode, in accordance with some other embodiments of the disclosure. Device 200B may be based on device 100 discussed with reference to FIG. 1 and repeated descriptions will be omitted for conciseness. In some other embodiments, the second parameter 114 may represent the forecasted renewable power that is generated by the renewable power source.

Referring to FIG. 2B, the processor 120 may be configured, at predetermined time intervals, to obtain information 220 indicative of a weather conditions of an area at which the renewable power source, e.g. photovoltaic device, is situated at. In various embodiments, the predetermined time intervals may range from 5 minutes to 60 minutes, preferably ranging from 15 minutes to 30 minutes. In various embodiments, the information 220 indicative of the weather condition may be a parameter indicative of the solar radiation levels at the area where the renewable power source is situated at. Based on the solar radiation levels, the processor 120 may be configured to determine the second parameter 114 of a forecasted renewable power that may be generated by the renewable power source, and that would be available to the HVAC unit at a later timepoint. Accordingly, in some embodiments, device 200B may also be referred to as "rule-based look-ahead controller" which simultaneously forecasts or predicts the renewable power available to the HVAC unit, e.g. second parameter 114, and determines the setpoint temperature 130 for optimal energy efficiency, based on the forecasted renewable power, e.g. second parameter 114 to provide real-time and adaptive control of the setpoint temperature 130. For example, the setpoint temperature 130 may be determined such that the HVAC unit operates a power consumption level that matches or is less than the forecasted renewable power, e.g. second parameter 114, generated by the renewable power source.

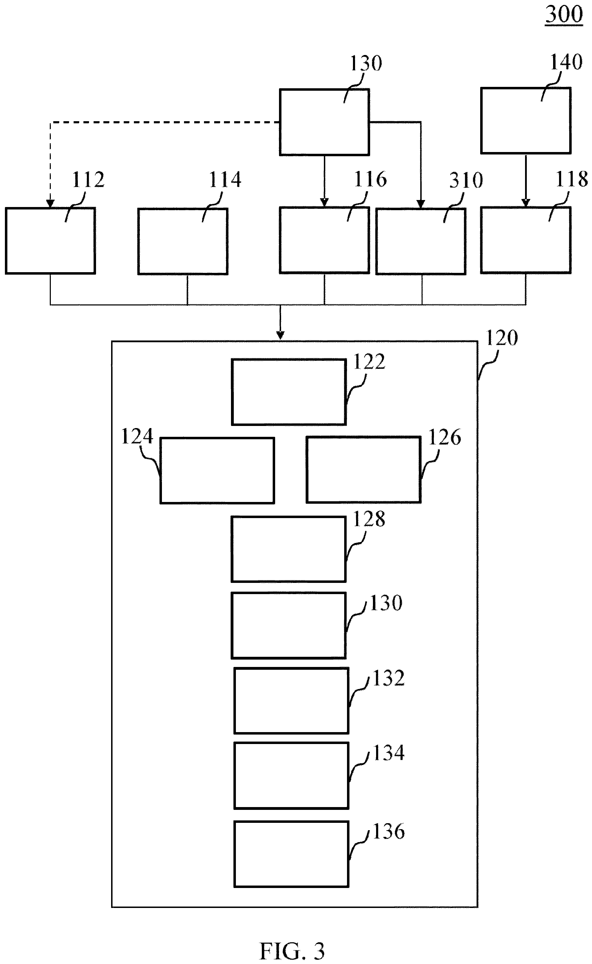

FIG. 3 shows another exemplary schematic illustration of the device 300 for determining the setpoint temperature 130 of the HVAC unit operating in the first mode. Device 300 may be based on any of devices 100, 200A, 200B described with reference to FIGS. 1 to 2B and repeated descriptions will be omitted for conciseness.

Referring to FIG. 3, once the processor 120 has determined the setpoint temperature 130, the processor 120 may be further configured to calculate a difference 132 between the setpoint temperature 130 and a previous setpoint temperature of the HVAC unit. The previous setpoint temperature may refer to a previous operating temperature (before adjusting the setpoint temperature 130 for optimal energy efficacy of the HVAC unit), or may refer to a user-desired setpoint temperature for maximizing the user's personal thermal comfort.

The processor 120 may be further configured to compare 134 the difference 132 between the setpoint temperature 130 and the previous setpoint temperature, with a predetermined threshold value. In various embodiments, the predetermined threshold value may range between 2 °C to 5 °C. In some embodiments, the predetermined threshold value may be 3 °C.

Referring to FIG. 3, the processor 120 may be further configured to calculate a ventilation speed 136 of the HVAC unit based on said comparison 134, and in various embodiments, to calculate the ventilation speed 136 when the difference 132 between the setpoint temperature 130 and the previous setpoint temperature, exceeds the predetermined threshold value, e.g. 3 °C. In other words, when the difference 132 between the setpoint temperature 130 and the previous setpoint temperature exceeds the predetermined threshold value, the thermal comfort of the user may be compromised, and accordingly, the device 300 may adjust, e.g. increase the ventilation speed of the HVAC unit, to minimize the thermal effect of the new setpoint temperature 130 on the user's thermal comfort.

In various embodiments, device 300 may further be operable in the second mode, in which the HVAC unit is configured to operate using renewable power and non-renewable power generated by the non-renewable power source. Referring to FIG. 3, the user interface 130 may be configured to obtain inputs for operating the HVAC unit in the second mode, and/or a second desired setpoint temperature 310, which may refer to a user's desired setpoint temperature for maximizing the user's personal thermal comfort. The processor 120 may further be configured to operate the HVAC unit in the second mode, and the processor 120 may therefore determine the setpoint temperature 130, as the second desired setpoint temperature 310. In other words, the device 300 may operate in the second mode which utilizes power from renewable and non-renewable power sources, for example, when there is insufficient power being supplied to the HVAC unit from the renewable power source, leading to the user's thermal discomfort. The device 300 of the present disclosure may therefore be configured to operate in modes for prioritizing the energy efficacy of the HVAC unit, and/or for prioritizing the thermal comfort of the user.

According to another aspect of the disclosure, there is provided a system for determining the setpoint temperature for the HVAC unit, based on and/or using the device 100, 200A, 200B and 300 described with reference to FIGS. 1 to 3. In the system, the processor 120 may be arranged in signal or data communication with at least one of the user interface 130, the first sensor 140 and/or the second sensor 210, such that in operation, the processor 120: receives inputs from at least one of the user interface 130, the first sensor 140 and the second sensor 210; compares at least one of the first parameter 112 and/or the third parameter 122, to that of the second parameter 114; and determines the setpoint temperature 130 based on said comparison, in particular, when the first parameter 112 and/or the third parameter 122 has a value which exceeds or is equal to the value of the second parameter 114.

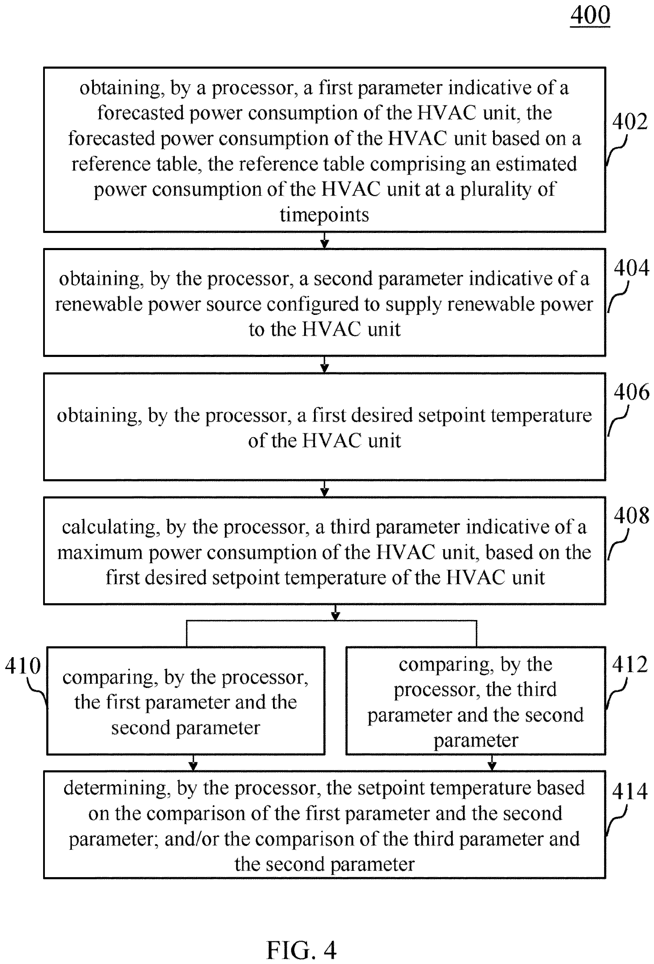

FIG. 4 shows an exemplary flowchart of a method 400 for determining a setpoint temperature of a HVAC unit operating in the first mode. Referring to FIG. 4, the method 400 comprises the steps of obtaining, by a processor, a first parameter indicative of a forecasted power consumption of the HVAC unit, the forecasted power consumption of the HVAC unit based on a reference table, the reference table comprising an estimated power consumption of the HVAC unit at a plurality of timepoints (step 402); obtaining, by the processor, a second parameter indicative of a renewable power source configured to supply renewable power to the HVAC unit (step 404); obtaining, by the processor, a first desired setpoint temperature of the HVAC unit (step 406) and further calculating, by the processor, a third parameter indicative of a maximum power consumption of the HVAC unit, based on the first desired setpoint temperature of the HVAC unit (step 408); comparing, by the processor, the first parameter and the second parameter (step 410) and/or comparing, by the processor, the third parameter and the second parameter (step 412); and determining, by the processor, the setpoint temperature based on the comparison of the first parameter and the second parameter; and/or the comparison of the third parameter and the second parameter (step 414), for example, when at least one of the first parameter and/or the third parameter exceeds that of the value of the second parameter. Accordingly, method 400 may determine the setpoint temperature which allows the HVAC unit to operate based on renewable power generated by a renewable power source, thereby maximizing the energy efficacy of the HVAC unit.

Various embodiments of the disclosure further provide a computer program product comprising software instruction which, when the program is executed on a processor, causes the processor to execute steps 402 to 414 of method 400 described with reference to FIG. 4

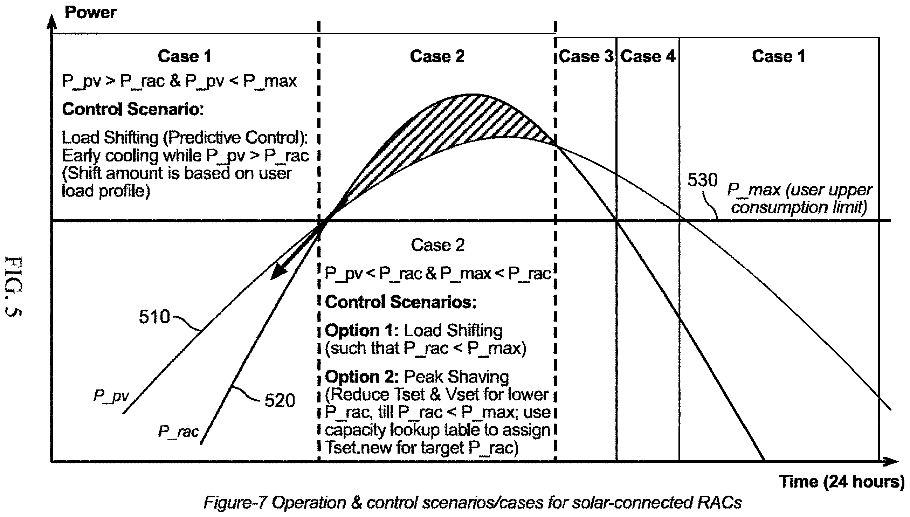

FIG. 5 shows an exemplary schematic illustration of the operating conditions and control scenarios of the device of the present disclosure. The device may refer to device 100, 200A, 200B, 300 described with reference to FIGS. 1 to 3. As shown in FIG. 5, curve 510 (P_pv) may represent the renewable power that is available to the HVAC unit, e.g. second parameter 114 and may include an actual renewable power or a forecasted renewable power; curve 520 (P_rac) may represent the forecasted power consumption of the HVAC unit based on the reference table comprising the estimated power consumption of the HVAC unit at the plurality of timepoints throughout the day, e.g. first parameter 112; and curve 530 (P_max) may represent the maximum power consumption of the HVAC unit at the first desired setpoint temperature 116.

Referring to FIG. 5, for case 1, when it is determined that the maximum power consumption of the HVAC unit (P_max), e.g. third parameter 122 is greater than or equal to the renewable power available to the HVAC unit, e.g. second parameter 114, and that the forecasted power consumption of the HVAC unit (P_rac), e.g. first parameter 112 is lower than or equal to the second parameter 114, i.e. P_rac ≤ P_pv ≤ P_max; the processor 120 is configured to determine the setpoint temperature 130 such that the HVAC unit operates based on the available renewable energy, e.g. second parameter 114. For example, the processor 120 may be configured to determine the setpoint temperature 130 based on the forecasted power consumption (P_rac), e.g. first parameter 112.

For case 2, when it is determined that the maximum power consumption (P_max), e.g. third parameter 122, is lower than or equal to the renewable power available to the HVAC unit (P_pv), e.g. second parameter 114, which in turn is lower than or equal to the forecasted power consumption (P_rac), e.g. first parameter 112, i.e. P_max ≤ P_pv ≤ P_rac; the processor 120 may be configured to determine the setpoint temperature 130 such that the forecasted power consumption, e.g. first parameter 112 is equal to or lower than that of the maximum power consumption (P_max), e.g. third parameter 122. Accordingly, the HVAC unit may be operable based on the available renewable power, e.g. second parameter 114, since the maximum power consumption (P_max), e.g. third parameter 122 is equal to or less than the available renewable power (P_pv).

For case 3, when it is determined that the maximum power consumption (P_max), e.g. third parameter 122, is lower than or equal to the forecasted power consumption (P_rac), e.g. first parameter 112, which is lower than or equal to the renewable power available to the HVAC unit (P_pv), e.g. second parameter 114, i.e. P_max ≤ P_rac ≤ P_pv; the processor 120 may be configured to determine the setpoint temperature 130 based on the forecasted power consumption of the HVAC unit, e.g. first parameter 112, which is equal to or less than the available renewable power (P_pv), e,g. second parameter 114.

For case 4, when it is determined that the forecasted power consumption of the HVAC unit, e.g. first parameter 112, is lower than or equal to the maximum power consumption (P_max), e.g. third parameter 122, which is lower than or equal to the renewable power available to the HVAC unit (P_pv), e.g. second parameter 114, i.e. P_rac ≤ P_max ≤ P_pv; the processor 120 may be configured to determine the setpoint temperature 130 based on the maximum power consumption (P_max), e.g. third parameter 122, which is less than the available renewable power (P_pv), e,g. second parameter 114.

The present disclosure thus provides an improved device and method for determining an optimal setpoint temperature for an energy efficient HVAC unit which is configured to operate based on renewable power generated by a renewable power source. Further, the improved device allows the user to select between maximizing personal thermal comfort and/or optimizing the energy efficiency of the HVAC unit, to ensure both energy efficiency and thermal comfort.

While the disclosure has been particularly shown and described with reference to specific embodiments, it should be understood by those skilled in the art that various changes in form and detail may be made therein without departing from the spirit and scope of the disclosure as defined by the appended claims. The scope of the disclosure is thus indicated by the appended claims and all changes which come within the meaning and range of equivalency of the claims are therefore intended to be embraced.

## Claims

1. A device (100, 200A, 200B, 300) for determining a setpoint temperature (130) of a heating, ventilation, and air-conditioning (HVAC) unit operating in a first mode, the device comprising
a processor (120) configured to obtain
a first parameter (112) indicative of a forecasted power consumption of the HVAC unit, the forecasted power consumption of the HVAC unit based on a reference table, the reference table comprising an estimated power consumption of the HVAC unit at a plurality of timepoints; and
a second parameter (114) indicative of a renewable power generated by a renewable power source configured to supply renewable power to the HVAC unit;
wherein the processor (120) is further configured to
compare (124) the first parameter (112) and the second parameter (114), and determine the setpoint temperature (130) based on the comparison (124) of the first parameter (112) and the second parameter (114).

2. The device (100, 200A, 200B, 300) of claim 1, further comprising
a user interface (130) for obtaining a first desired setpoint temperature (116) of the HVAC unit;
wherein the processor (120) is further configured to
calculate a third parameter (122) indicative of a maximum power consumption of the HVAC unit, based on the first desired setpoint temperature (116) of the HVAC unit,
compare (126) the third parameter (122) and the second parameter (114), and determine the setpoint temperature (130) based on the comparison of the third parameter (122) and the second parameter (114).

3. The device (100, 200A, 200B, 300) of claim 2, wherein the processor (120) is configured to determine the setpoint temperature (130), wherein at least one of the first parameter (112) or the third parameter (122) is greater than or equal to the second parameter (114).

4. The device (100, 200A, 200B, 300) of any one of claims 1 to 3, wherein the estimated power consumption of the reference table of the HVAC unit at the plurality of timepoints is based on
a reference indoor temperature reading within an enclosed area;
a reference outdoor temperature reading external to the enclosed area;
a reference power consumption demand of the HVAC unit; and/or
a reference running frequency of a compressor of the HVAC unit.

5. The device (100, 200A, 200B, 300) of claim 4, further comprising
a first sensor (140) for obtaining an outdoor temperature reading (118) indicative of the outdoor temperature external to the enclosed area;
wherein the processor (120) is configured to
compare (128) the outdoor temperature reading (118) and the reference outdoor temperature reading of the reference table of the HVAC unit, and
determine the setpoint temperature (130), based on the comparison of the outdoor temperature reading (118) and the reference outdoor temperature reading.

6. The device (100, 200A, 200B, 300) of any one of claims 1 to 5, further comprising
a second sensor (210) for obtaining the second parameter (114) as an actual renewable power generated by the renewable power source.

7. The device (100, 200A, 200B, 300) of any one of claims 1 to 5, wherein the second parameter (114) comprises a forecasted renewable power generated by the renewable power source, and
wherein the processor (120) is further configured to, at predetermined time intervals
obtain information (220) indicative of a weather condition of an area at which the renewable power source is situated at, and
determine the forecasted renewable power generated by the renewable power source, based on the information indicative of the weather condition of the area at which the renewable power source is situated at.

8. The device (100, 200A, 200B, 300) of claim 7, wherein the information (220) indicative of the weather condition is a parameter indicative of solar radiation levels of the area at which the renewable power source is situated at.

9. The device (100, 200A, 200B, 300) of any one of claims 3 to 7, wherein the processor (120) is further configured to
calculate a difference (132) between the setpoint temperature (130) and a previous setpoint temperature of the HVAC unit,
compare (134) the difference (132) between the setpoint temperature and the previous setpoint temperature of the HVAC unit, with a predetermined threshold value, and
calculate a ventilation speed (136) of the HVAC unit, based on the comparison (134) of said difference (132) with the predetermined threshold value.

10. The device (100, 200A, 200B, 300) of claim 9, wherein the processor (120) is configured to
calculate the ventilation speed (136) of the HVAC unit, when the difference (132) between the setpoint temperature (118) and the previous setpoint temperature, is greater than the predetermined threshold value.

11. The device (100, 200A, 200B, 300) of any one of claims 2 to 9,
wherein the user interface (130) is further configured to obtain a second mode for operating the HVAC unit; and/or
a second desired setpoint temperature for the HVAC unit;
wherein the processor (120) is further configured to
operate the HVAC unit in the second mode, and
determine the setpoint temperature (130), based on the second desired setpoint temperature.

12. The device (100, 200A, 200B, 300) of claim 11, wherein
in the first mode, the HVAC unit is configured to operate using the renewable power generated by the renewable power source; and
in the second mode, the HVAC unit is configured to operate using the renewable power generated by the renewable power source, and a non-renewable power generated by a non-renewable power source, the non-renewable power source configured to supply non-renewable power to the HVAC unit.

13. The device (100, 200A, 200B, 300) of any one of claims 1 to 12, wherein the renewable power source is a photovoltaic device.

14. A method (400) for determining a setpoint temperature of a heating, ventilation, and air-conditioning (HVAC) unit operating in a first mode, the method (400) comprising the steps of
obtaining, by a processor, a first parameter indicative of a forecasted power consumption of the HVAC unit, the forecasted power consumption of the HVAC unit based on a reference table, the reference table comprising an estimated power consumption of the HVAC unit at a plurality of timepoints (402);
obtaining, by the processor, a second parameter indicative of a renewable power source configured to supply renewable power to the HVAC unit (404);
comparing, by the processor, the first parameter and the second parameter (410); and determining, by the processor, the setpoint temperature based on the comparison of the first parameter and the second parameter (414).

15. A computer program product, comprising software instruction which, when the program is executed on the processor, causes the processor to execute the steps of claim 14.
